# EUROPÄISCHE PATENTSCHRIFT

(11) **EP 1 524 137 B1**
(45) Veröffentlichungstag und Bekanntmachung des Hinweises auf die Patenterteilung: **09.12.2009**
(21) Anmeldenummer: 04021696.2
(22) Anmeldetag: 13.09.2004
(51) Int. Cl.: B60H 1/00

(54) **Verfahren zum Betreiben einer Fahrzeug-Klimaanlage**
Method for operating a vehicle air-conditioner
Procédure pour faire fonctionner un dispositif de climatisation de véhicule

(30) Priorität: 16.10.2003 DE 10348702
(43) Veröffentlichungstag der Anmeldung: 20.04.2005
(73) Patentinhaber: Behr GmbH & Co. KG, 70469 Stuttgart (DE)
(72) Erfinder: Baruschke, Wilhelm, Dipl.-Ing., 73117 Wangen (DE); Kunberger, Ottokar, Dipl.-Ing. (FH), 70825 Korntal-Münchingen (DE); Lindauer, Sascha, Dipl.-Ing. (FH), 73553 Altdorf (DE); Lochmahr, Karl, Dipl.-Ing. (FH), 71665 Vaihingen (DE)
(74) Vertreter: Grauel, Andreas

(56) Entgegenhaltungen:
- DE-A1- 10 106 243
- US-A1- 2002 026 801
- US-A1- 2002 108 384

## Beschreibung

Die Erfindung betrifft ein Verfahren zum Betrieb einer Fahrzeug-Klimaanlage mit einer Kompressionskälteanlage. Ein derartiges Verfahren ist beispielsweise aus der DE 101 06 243 A1 bekannt.

Nach dem aus der DE 101 06 243 A1 bekannten Verfahren wird ein Kompressor eines Kältemittelkreislaufs einer Klimaanlage eines Kraftfahrzeugs derart betrieben, dass in Betriebszuständen, in welchen eine hohe Motorleistung des Kraftfahrzeugmotors notwendig ist, das Lastdrehmoment des Kompressors reduziert wird. Ziel ist hierbei eine Vermeidung einer vollständigen Abschaltung des Kompressors der Klimaanlage bei hoher angeforderter Leistung des Fahrzeugmotors, um vom Fahrzustand abhängige Komforteinbußen möglichst gering zu halten. Auch mit einer reduzierten Anzahl vom Betriebszustand des Fahrzeugs abhängiger Ein- und Ausschaltvorgänge des Kompressors können sich jedoch Schwankungen der für den Kompressorentrieb zur Verfügung stehenden Leistung nachteilig auf den Komfort sowie die Verbrennungsmotor- und Getriebesteuerung auswirken.

Aus der US 2002/0026801 A1 ist eine Klimaanlage für ein Elektrofahrzeug bekannt, wobei bei Erhöhung der angeforderten Kompressorleistung die Leistung des Kondensatorlüfters erhöht wird.

Der Erfindung liegt die Aufgabe zugrunde, ein Verfahren zum Betrieb einer mit einem Kältemittelkompressor arbeitenden Fahrzeug-Klimaanlage anzugeben, welches sich insbesondere im Fall von durch Änderung des Fahrzustandes des Kraftfahrzeugs und/oder durch Eingaben des Benutzers bedingten Änderungen des Betriebszustands des Kompressors durch einen besonders hohen Komfort bei gleichzeitig höchstens geringer Beeinträchtigung des Antriebs des Kraftfahrzeugs auszeichnet.

Diese Aufgabe wird erfindungsgemäß gelöst durch ein Verfahren zum Betrieb einer einen Kältemittelkompressor aufweisenden Fahrzeug-Klimaanlage mit den Merkmalen des Anspruchs 1. Der Kältemittelkreislauf der Fahrzeug-Klimaanlage umfasst hierbei in an sich bekannter Weise einen Kältemittelkondensator sowie einen Verdampfer, der der Kühlung eines Luftstroms dient. Zur Kühlung des Kondensators ist ein Kondensatorlüfter vorgesehen, während der den Verdampfer beaufschlagende, zu kühlende Luftstrom von einem Gebläse gefördert wird. Ein besonders sanfter Übergang des Lastdrehmoments des Kompressors ist dadurch gegeben, dass bei Erhöhung der angeforderten Kompressorleistung das Verhältnis zwischen der Leistung des Gebläses und der Leistung des Kondensatorlüfters zugunsten des Kondensatorlüfters verschoben wird, wobei vorzugsweise sowohl die Leistung des Kondensatorlüfters erhöht als auch die Leistung des Gebläses reduziert wird. Die Erhöhung sowie Reduzierung der Leistung des Kondensatorlüfters bzw. der Leistung des Gebläses bezieht sich jeweils auf den Betriebszustand der Fahrzeug-Klimaanlage, in welchen diese zu einem späteren Zeitpunkt nach Erhöhung der angeforderten Kompressorleistung gelangt. Dies bedeutet insbesondere, dass bei Ingangsetzung des Kompressors als Spezialfall einer Erhöhung der angeforderten Kompressorleistung zwar sowohl der Kondensatorlüfter als auch das Gebläse in Gang gesetzt oder weiter betrieben werden, jedoch im Vergleich zu einem stationären Betriebszustand, welchem sich der Betrieb der Fahrzeug-Klimaanlage nach dem Einschalten des Kompressors annähert, die Drehzahl der Kondensatorlüfters erhöht und/oder die Drehzahl des Gebläses herabgesetzt ist.

Die Erfindung geht von der Überlegung aus, dass zum einen eine Komfortverbesserung in einem Kraftfahrzeug durch eine Vergleichmäßigung des Lastdrehmomentverlaufs des Klimaanlagen-Kompressors erreichbar ist. Zum anderen ergeben sich Vorteile hinsichtlich Verbrennungsmotor- und Getriebesteuerung. Der Leistungsbedarf des Kompressors ist um so höher je höher der Druck auf der Hochdruckseite des Kältemittelkreislaufs, d. h. auf der Seite des Kältemittelkondensators, und je niedriger der Druck auf der Niederdruckseite des Kältemittelkreislaufs, d. h. auf der Seite des Kältemittelverdampfers ist. Der Kältemitteldruck auf der Hochdruckseite wird bestimmt durch die Kondensationstemperatur des Kältemittels im Kondensator. Diese Temperatur ist beeinflussbar durch das Ausmaß der Energieabführung vom Kondensator, d. h. insbesondere durch die Drehzahl des Kondensatorlüfters im Fall eines luftgekühlten Kondensators. Eine intensivere Kühlung des Kondensators durch eine Erhöhung der Drehzahl des Kondensatorlüfters wirkt sich daher dämpfend auf den Anstieg des Leistungsbedarfs und damit des Lastdrehmoments des Kompressors aus. Eine andere Überlegung ist im Fall des Kältemittelverdampfers anzustellen: Durch eine Saugdruckregelung des Kompressors ist dessen Leistungsbedarf um so höher, je tiefer die Verdampfungstemperatur des Kältemittels ist. Das verdampfende Kältemittel entzieht der Umgebung, insbesondere dem Luftstrom, welcher den Verdampfer beaufschlagt, Wärme. Um einen Anstieg einer Verdampfungstemperatur zu verhindern, ist daher bei einer Erhöhung des den Verdampfer beaufschlagenden Luftmassenstroms zugleich der Kältemittelstrom im Kältekreislauf zu erhöhen, d. h. die Leistung des Kompressors heraufzusetzen. Umgekehrt bedeutet dies, dass bei einer Erhöhung der angeforderten Kompressorleistung der Anstieg des Lastdrehmoments des in der Regel vom Fahrzeugmotor angetriebenen Kompressors gedämpft werden kann, indem die Gebläseleistung reduziert, insbesondere zumindest kurzzeitig auf null herabgesetzt wird. Grenzen hinsichtlich der Reduzierung der Gebläsedrehzahl können hierbei durch Komfortbedingungen, insbesondere das Erfordernis, die Scheiben des Fahrzeugs beschlagfrei zu halten, gesetzt sein. Unter dieser Randbedingung erfolgt bei Erhöhung der angeforderten Kompressorleistung, insbesondere bei Einschaltung des Kompressors, zusätzlich zur intensivierten Energieabfuhr vom Kältemittelkondensator bevorzugt gleichzeitig eine Herabsetzung der Verdampfer-Gebläseleistung.

Der Kompressor der nach dem erfindungsgemäßen Verfahren arbeitenden Fahrzeug-Klimaanlage ist nicht notwendigerweise vom Fahrzeugmotor mechanisch angetrieben. Als altematives Konzept kann beispielsweise auch ein Hilfsaggregat zur Standklimatisierung, welches beispielsweise als so genannte Steam-Cell ausgeführt ist, vorgesehen sein. Zum Betrieb des Hilfsantriebs ist eine Vergleichmäßigung des Lastdrehmoments des Kompressors zwingend erforderlich, außerdem wird die Zuverlässigkeit und Lebensdauer erhöht.

Wie vorstehend erläutert, wirkt sich eine Erhöhung der Drehzahl des Gebläses erhöhend auf den Leistungsbedarf des Kompressors der Klimaanlage aus. Demgemäß ist eine Heraufschaltung der Leistung des Gebläses, insbesondere durch manuelle Schalterbetätigung, als Erhöhung der angeforderten Kompressorleistung zu verstehen. Um in diesem Fall einen flachen Anstieg des Lastdrehmoments des Kompressors zu erreichen, wird die Drehzahl des Gebläses lediglich gedämpft erhöht. Die Reduzierung der Leistung des Gebläses erfolgt damit zeitlich begrenzt in Relation zum vom Benutzer gewählten, sich verzögert einstellenden Betriebszustand des Gebläses. Ebenso wie die Herabsetzung bzw. gedämpfte Erhöhung der Leistung des Gebläses erfolgt gegebenenfalls auch eine Erhöhung der Leistung des Kondensatorlüfters, insbesondere eine Heraufsetzung der elektrischen Spannung des Kondensatorlüfters auf die maximale Kondensatorlüfterspannung, bei Erhöhung der angeforderten Kompressorleistung stets zeitlich begrenzt.

Der Kompressor der Klimaanlage weist vorzugsweise ein mit einer Saugdruckregelung, insbesondere internen Saugdruckregelung, zusammenwirkendes Kompressorregelventil auf, welches in Abhängigkeit von der gewünschten Verdampfertemperatur angesteuert wird. Damit ist ein intern geregelter und extern gesteuerter Kompressor gegeben. In an sich, beispielsweise aus der DE 101 06 243 A1 bekannter Weise ist mittels der Saugdruckregelung vorzugsweise das Hubvolumen des Kompressors verstellbar. Wie ebenso prinzipiell aus der DE 101 06 243 A1 bekannt, erfolgt die Ansteuerung des Kompressorregelventils bevorzugt durch ein pulsweitenmoduliertes Signal. Ferner geht nach einer bevorzugten Ausgestaltung auch der im Kältekreislauf nach dem Kompressor gemessene Hochdruck in die Ansteuerung des Kompressorregelventils und damit in die Regelung des Hubvolumens des Kompressors ein. In bevorzugter Weise wird auch hierbei das Verfahren der Pulsweitenmodulation zur Ansteuerung des Kompressorregelventils genutzt.

Im Unterschied zum Verfahren nach der DE 101 06 243 A1 ist jedoch vorzugsweise keine alternative Regelung entweder über die Verdampfertemperatur oder über den Druck des Kältemittels auf der Hochdruckseite des Kältemittelkreislaufs vorgesehen, sondern eine Verknüpfung des aus der Messung der Verdampfertemperatur abgeleiteten Signals mit dem aus der Messung des Kältemitteldrucks auf der Hochdruckseite abgeleiteten Signal. Hierbei ist die Frequenz eines aus der Verdampfertemperatur generierten pulsweitenmodulierten Signals vorzugsweise höher, insbesondere mindestens doppelt so hoch, als die Frequenz eines aus der Druckmessung generierten pulsweitenmodulierten Signals. Die Druckmessung auf der Hochdruckseite des Kältemittelkreislaufs erfolgt entweder zwischen dem Kompressor und dem Kondensator oder zwischen dem Kondensator und einem die Hochdruckseite begrenzenden Expansionsventil, wobei die erstgenannte Variante in dynamischer Hinsicht von Vorteil ist. Die beiden, aus der Temperatur- und aus der Druckmessung abgeleiteten pulsweitenmodulierten (PWM) Signale werden in einem Verknüpfungsmodul zusammengeführt, welches eine logische Und-Verknüpfung vornimmt. Durch die wesentlich, beispielsweise zehnfach, höhere Frequenz des PWM-Signals aus der Verdampfertemperaturmessung im Vergleich zum PWM-Signal aus der Hochdruckmessung ist somit praktisch das Signal der Saugdruckregelung mittels des überlagerten Signals der Hochdruckmessung getaktet unterbrochen. Dies bedeutet, dass die Geschwindigkeit, mit welcher das Kompressorregelventil saugdruckabhängig verstellt wird, durch die überlagerte Hochdruckregelung reduziert wird.

Die Hochdruckregelung greift bevorzugt um so mehr in die saugdruckabhängige Regelung ein, je größer die positive Differenz zwischen gemessenem und gewünschtem Hochdruck (= maximal zulässiger Hochdruck) ist. Bei ausreichendem Abstand des Kältemitteldrucks vom maximal zulässigen Hochdruck entfällt hierbei automatisch die beschriebene Dämpfung des pulsweitenmodulierten Signals der Saugdruckregelung. In einer besonders einfachen Ausführungsform ist durch die Messung auf der Hochdruckseite des Kältemittelkreislaufs lediglich ein Grenzwertschalter realisiert, bei dessen Ansprechen die Weiterleitung des PWM-Signals der Saugdruckregelung an das Kompressorregelventil durch das Verknüpfungs- oder Vergleichsmodul unterbunden wird. Vorzugsweise ist ein in die Saugdruckregelung eingreifender Grenzwertschalter auf der Hochdruckseite des Kältemittelkreislaufs zusätzlich zur Hochdruckregelung vorgesehen. Mit dem gemessenen Hochdruck ist eine Größe gegeben, aus welcher, zusammen mit anderen Größen, insbesondere der Drehzahl des Kompressors, das Lastdrehmoment des Kompressors rechnerisch zumindest annähernd bestimmbar ist. Da das Lastdrehmoment des Kompressors mit zunehmendem Hochdruck steigt, wirkt der Eingriff der Hochdruckregelung in die Saugdruckregelung des Kompressors insbesondere bei höherer Leistungsaufnahme des Kompressors lastmomentreduzierend und ermöglicht besonders sanfte Übergänge des Lastdrehmoments bei Änderungen des Betriebszustandes des Kompressors.

Die lastmomentreduzierenden Maßnahmen durch Anhebung der Kondensatorlüfterleistung und/oder durch Absenkung der Verdampfergebläseleistung und/oder durch ein der vorstehend beschriebenen Verfahren zur Hochdruckregelung können bedarfsgerecht auf Anforderung des Verbrennungsmotor- und/oder Getriebe-Steuergeräts auf vorteilhafte Weise sowohl in statischer als auch in dynamischer Hinsicht angewandt werden. Besonders vorteilhaft im Sinne einer Schonung von Antriebskomponenten des Fahrzeugs und der Klimaanlage sowie eines hohen Komforts ist damit sowohl bei Einschaltung des Kompressors als auch einer Leistungsänderung im laufenden Betrieb der Klimaanlage die besonders geringe Ausprägung von Lastdrehmomentsprüngen des Klimaanlagen-Kompressors.

Mehrere Ausführungsbeispiele der Erfindung werden nachfolgend anhand einer Zeichnung näher erläutert. Hierin zeigen jeweils in einem schematischen Fließbild:

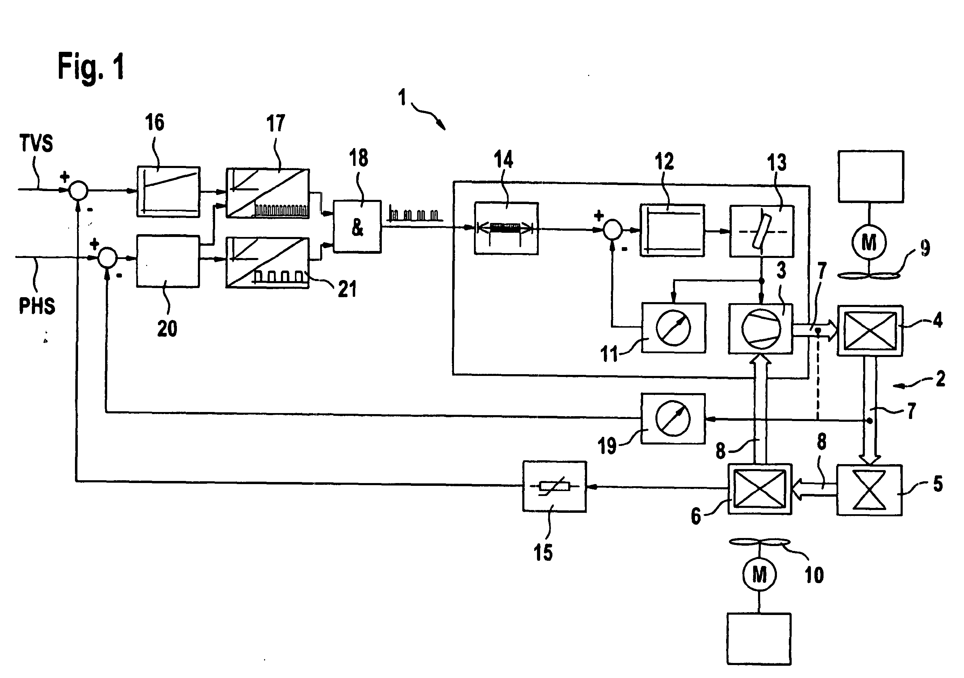

- Fig. 1 bis 3: verschiedene Ausführungsbeispiele einer Fahrzeug-Klimaanlagen-Steuerung mit überlagerter Kältemittel-Hochdruckregelung.

Einander entsprechende oder gleich wirkende Teile sind in allen Figuren mit den gleichen Bezugszeichen versehen.

Die in den Fig. 1, 2 und 3 gezeigten Ausführungsbeispiele betreffen jeweils eine nach dem Komressionsverfahren arbeitende Fahrzeug-Klimaanlage 1. In allen Fällen umfasst ein Kältemittelkreislauf 2, beispielsweise mit dem Kältemittel R134a, einen Kompressor 3 mit variablem Hubvolumen, einen Kältemittelkondensator 4, ein Expansionsventil 5 sowie einen Verdampfer 6. Die genannten Komponenten sind durch Hochdruckleitungen 7 bzw. Niederdruckleitungen 8 verbunden. Zur Wärmeabfuhr vom Kondensator 4 ist ein Kondensatorlüfter 9 vorgesehen; die Energiezufuhr zum Verdampfer 6 erfolgt mittels eines Gebläses 10, welches einen zu kühlenden Luftstrom in den Innenraum des Fahrzeugs fördert.

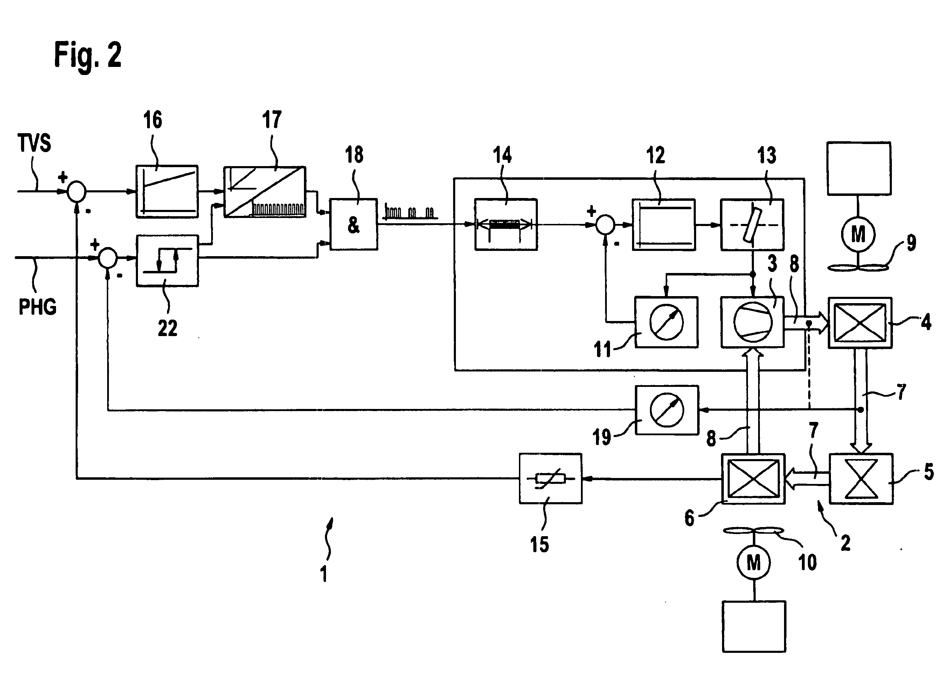

Der Kompressor 3 weist in nachstehend beschriebener Weise eine interne Saugdruckregelung sowie eine mit dieser zusammenwirkende externe Verdampfertemperaturregelung auf. Der Saugdruck am Kompressor 3 wird mittels einer Saugdruckmessvorrichtung 11 gemessen, welche im internen Saugdruckregelkreis einen Saugdruck-Istwert einem mechanischen Saugdruckregler 12 zuführt, der zur Verstellung des Hubvolumens des Kompressors 3 mittels einer Verstellvorrichtung 13 vorgesehen ist. Der Sollwert des Saugdrucks wird vorgegeben durch ein Kompressorregelventil 14, welches an die externe Verdampfertemperaturregelung angeschlossen ist. Hierbei wird die Verdampfungstemperatur des Kältemittels im Verdampfer 6 mittels einer Verdampfertemperaturmesseinrichtung 15 bestimmt und ein entsprechendes elektrisches Signal, welches mit einem Verdampfertemperatursollwert TVS verglichen wird, an einen Verdampfertemperaturregler 16 geleitet. Das von diesem generierte elektrische Signal wird mittels eines Umsetzers 17 in ein pulsweitenmoduliertes Signal (PWM-Signal) umgesetzt, welches einem Vergleicher 18 zugeführt wird. Der Vergleicher 18 tritt ausschließlich in Funktion, wenn die nachstehend noch näher erläuterte Hochruckregelung in Funktion ist. Ansonsten wird das PWM-Signal vom Umsetzer 17 unverändert dem Kompressorregelventil 14 zugeleitet, wodurch die Verbindung zur internen Saugdruckregelung hergestellt ist zutreffend für Varianten in den Fig 1 und 2.

Eine zusätzliche, mit der Saugdruckregelung zusammenwirkende Hochdruckregelung umfasst ein Hochdruckmessgerät 19, welches den Druck des Kältemittels in der Hochdruckleitung 7 entweder zwischen dem Kondensator 4 und dem Expansionsventil 5 oder, wie gestrichelt angedeutet, zwischen dem Kompressor 3 und dem Kondensator 4 misst. Das gemessene Hochdrucksignal wird im Ausführungsbeispiel nach Fig. 1 mit einem Hochdrucksollwert PHS verglichen und einem Hochdruckregler 20 zugeführt, welcher als Hochdruckbegrenzer ausgebildet sein kann. Der Hochdruckregler 20 leitet ein elektrisches Signal über einen zweiten Umsetzer 21, welcher ähnlich dem ersten Umsetzer, jedoch mit wesentlich geringerer Frequenz, ein pulsweitenmoduliertes Signal generiert, an den Vergleicher 18 weiter. Der Vergleicher 18 stellt eine Und-Verknüpfung zwischen den PWM-Signalen der Umsetzer 17, 21 her, so dass ausschließlich dann ein Signal zur Verstellung eines Kompressorregelventils 14 weitergeleitet wird, wenn beide Umsetzer 17, 21 eine Eingangsspannung, entsprechend einem Rechteckimpuls in den Darstellungen, liefern.

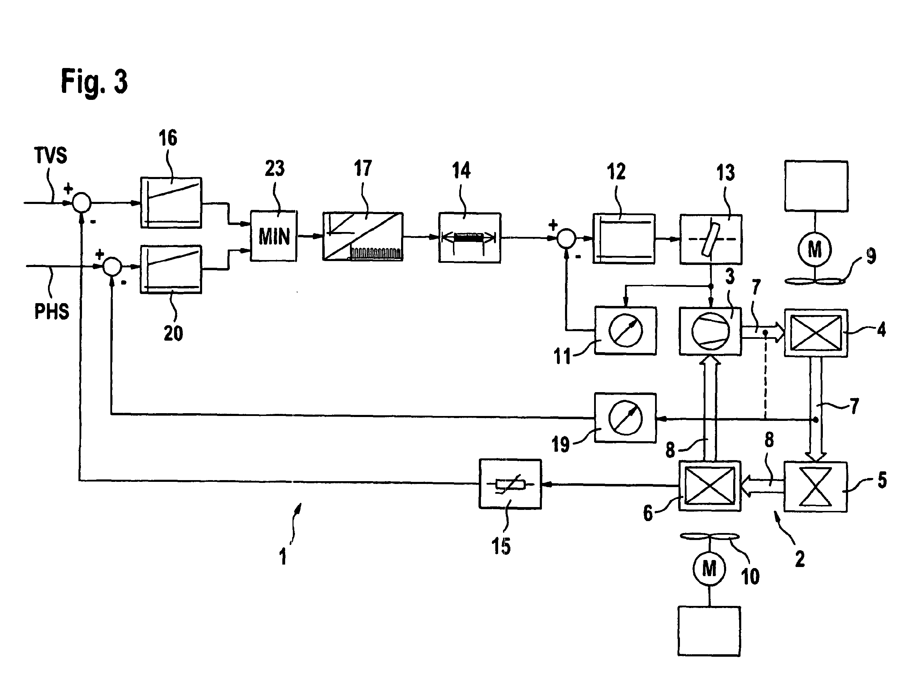

Abweichend hiervon ist im Ausführungsbeispiel nach Fig. 2 lediglich ein Hochdruckbegrenzer 22 vorgesehen, welcher den mittels des Hochdruckmessgerätes 19 gemessenen Kältemitteldruck auf der Hochdruckseite des Kältemittelkreislaufs 2 mit einem Hochdruckgrenzwert PHG vergleicht. Der Hochdruckbegrenzer 22 ist direkt mit dem Vergleicher 18 verknüpft. Solange der gemessene Hochdruck den Hochdruckgrenzwert PHG nicht übersteigt, wird das vom ersten Umsetzer 17 generierte PWM-Signal unverändert durch den Vergleicher 18 durchgeleitet. Bei Ansprechen des Hochdruckbegrenzers 22 erfolgt dagegen keine Signalweiterleitung durch den Vergleicher 18 an das Kompressorregelventil 14. Mittels des Hochdruckbegrenzers 22 ist damit praktisch der einfachste Fall einer überlagerten Hochdruckregelung realisiert. In einem 3. Ausführungsbeispiel nach Fig. 3 werden die Ausgangssignale des Verdampfertemperaturreglers 16 und des Hochdruckreglers 20 über einem Minimalwertbildner 23 miteinander verknüpft und das resultierende Signal wird dem bekannten PWM-Umsetzer 17 zugeführt, welcher das Kompressorregelventil 14 steuert. Die nachfolgenden Ausführungen beziehen sich wieder - soweit nicht ausdrücklich anders erwähnt - auf alle drei Ausführungsformen.

Betrachtet wird zunächst der Fall einer Erhöhung der angeforderten Leistung des Kompressors 3 durch Herabsetzung des Verdampfungstemperatursollwertes TVS, beispielsweise durch manuelle Eingabe mittels eines nicht dargestellten Bedienelementes. Durch die Änderung des Verdampfungstemperatursollwertes TVS erfolgt eine Änderung des PWM-Signals der Verdampfertemperaturregelung, welches als Stromsignal mittels Spannungs-PWM beispielsweise im Bereich zwischen 300 mA und 700 mA variierbar ist. Der Wert von 300 mA entspricht dabei dem minimalen Ansteuergrad des Kompressorregelventils 14, welcher kompressorbedingt nicht unterschritten werden darf. Der Anstieg des an das Kompressorregelventil 14 geleiteten PWM-Signals wird auf mehrere Arten gedämpft: Die am Gebläse 10 anliegende Spannung und damit die Drehzahl des Gebläses 10 wird reduziert. Je nach Komfortbedingungen, wobei u. a. der Taupunkt des vom Gebläse 10 geförderten Luftstroms relevant ist, erfolgt eine Drehzahlreduzierung des Gebläses 10 bis hin zu dessen insbesondere kurzzeitiger Abschaltung. Die Temperatur im Verdampfer 4 sinkt hierdurch ab, was zu einer raschen Annäherung der Verdampfungstemperatur an den Verdampfertemperatursollwert TVS führt. Hierdurch wird der zusätzlichen Leistungsanforderung an den Kompressor 3 entgegengewirkt. Des Weiteren wird die Leistung des Kondensatorlüfters 9 erhöht und damit die Kondensationstemperatur des Kältemittels im Kältekreislauf 2 reduziert. Diese Maßnahme ist ebenfalls im Sinne einer Entlastung des Kompressors 3 wirksam. Beide Maßnahmen werden vorzugsweise gleitend aufgehoben, bis der Kompressor 3 in einem stationären Zustand betrieben wird, welcher der vom Benutzer gewählten Einstellung entspricht. Die Zeitintervalle der Regelung können dabei derart gewählt werden, dass einerseits das Lastdrehmoment des Kompressors 3 sich nur mit einem flachen, die Steuerung des Verbrennungsmotors und des Getriebes des Fahrzeugs nicht nachteilig beeinflussenden Gradienten ändert. Andererseits lässt sich durch die Steuergeräte für Verbrennungsmotor oder Getriebe ein Lastdrehmoment-Verlauf vorgeben, der über das beschriebene Verfahren nachgefahren werden kann.

Ein weiterer Fall, in welchem die angeforderte Kompressorleistung annähemd sprunghaft steigt, ist gegeben, wenn die Leistung des Gebläses 10, beispielsweise durch Betätigung eines hierfür vorgesehenen Drehschalters, erhöht wird. Hierbei ist die erhöhte Einstellung der Gebläseleistung als Sollwerteinstellung zu verstehen. Die tatsächliche Leistung des Gebläses 10 bleibt für einen beschränkten Zeitraum von beispielsweise einigen Sekunden gegenüber dem Sollwert abgesenkt, d. h. wird nur gedämpft erhöht. Dies dient ebenfalls der Glättung des zeitlichen Verlaufs des vom Verbrennungsmotor des Kraftfahrzeugs aufzubringenden Lastdrehmoments des Kompressors 3. Gleichzeitig mit der verzögerten Erhöhung der Leistung des Gebläses 10 kann auch in diesem Fall per Vorsteuerung in vorteilhafter Weise die Leistung des Kondensatorlüfters 9 erhöht werden.

In den vorstehend erläuterten Beispielen wurde zunächst davon ausgegangen, dass die Hochdruckregelung der Fahrzeug-Klimaanlage 1 nicht in Funktion ist. Dies gilt insbesondere bei relativ geringem Druck in der Hochdruckleitung 7, was einer geringen Belastung, d. h. einem geringen Lastdrehmoment des Kompressors 3 entspricht. Bei Anstieg des Hochdrucks im Kältemittelkreislauf 2 auf mittlere Werte im Ausführungsbeispiel nach Fig. 1 bzw. in den Bereich des Hochdruckgrenzwertes PHG im Ausführungsbeispiel nach Fig. 2 greift dagegen zunehmend die Hochdruckregelung in die Saugdruckregelung ein. Im Ausführungsbeispiel nach Fig. 1 ist der Abstand zwischen den Pulsen des PWM-Signals des Umsetzers 21 um so größer, je höher der mittels des Hochdruckmessgerätes 19 gemessene Druck in Relation zum Hochdrucksollwert PHS ist. Hierdurch wird das vom ersten Umsetzer 17 generierte relativ schnelle PWM-Signal um so mehr unterdrückt, je höher der hochdruckseitige Druck des Kältemittels ist. Damit wird die Verstellung des Hubvolumens des Kompressors 3 mittels der Verstellvorrichtung 13 um so mehr verlangsamt, je höher der Kältemitteldruck in den Hochdruckleitungen 7 ist. Effektiv sind somit Änderungsgeschwindigkeiten des Lastdrehmoments des Kompressors 3 realisierbar, welche durch die Mindestvorgabe eines PWM-Signals in Höhe von 300 mA ansonsten bei jeglicher Betätigung des Kompressorregelventils 14 stets überschritten wären. In Zusammenwirkung mit der lastmomentbezogenen Aufschaltung des Kondensatorlüfters 9 und des Gebläses 10 ist somit insbesondere bei höherer Leistung des Kompressors 3 ein besonders schonender Betrieb der Fahrzeug-Klimaanlage gegeben. Hierdurch ist sowohl die Lebensdauer der Fahrzeug-Klimaanlage 1 als auch von Antriebskomponenten im Fahrzeug erhöht. Weiterhin ist durch den sanften Anlauf des Kompressors 3, auch als Softstart bezeichnet, eine deutliche Komfortsteigerung gegeben. Ein besonderer Vorteil des erfindungsgemäßen Verfahrens liegt darin, dass dieses rein steuerungstechnisch, insbesondere softwaretechnisch, im Vergleich zu herkömmlichen Fahrzeug-Klimaanlagen ohne zusätzlichen gerätetechnischen Aufwand realisierbar ist.

### Bezugszeichen

- 1: Fahrzeug-Klimaanlage
- 2: Kältemittelkreislauf
- 3: Kompressor
- 4: Kältemittelkondensator
- 5: Expansionsventil
- 6: Verdampfer
- 7: Hochdruckleitung
- 8: Niederdruckleitung
- 9: Kondensatorlüfter
- 10: Gebläse
- 11: Saugdruckmessvorrichtung
- 12: Saugdruckregler
- 13: Verstellvorrichtung
- 14: Kompressorregelventil
- 15: Verdampfertemperaturmesseinrichtung
- 16: Verdampfertemperaturregler
- 17: Umsetzer
- 18: Vergleicher
- 19: Hochdruckmessgerät
- 20: Hochdruckregler
- 21: Umsetzer
- 22: Hochdruckbegrenzer
- 23: Minimalwertbildner

- PHG: Hochdruckgrenzwert
- PHS: Hochdrucksollwert
- TVS: Verdampfertemperatursollwert

## Patentansprüche

1. Verfahren zum Betrieb einer Fahrzeug-Klimaanlage, welche einen leistungsgeregelten Kompressor (3), einen Kältemittelkondensator (4), einen zu dessen Kühlung vorgesehenen Kondensatorlüfter (9) und ein zur Beaufschlagung eines Verdampfers (6) mit einem Luftstrom vorgesehenes Gebläse (10) umfasst,
wobei,
bei Erhöhung der angeforderten Kompressorleistung das Verhältnis zwischen der Leistung des Gebläses (10) und der Leistung des Kondensatorlüfters (9) zugunsten des Kondensatorlüfters (9) verschoben wird, **dadurch gekennzeichnet, dass** bei Anwahl einer erhöhten Leistung des Gebläses (10) diese gedämpft gesteigert wird.

2. Verfahren nach Anspruch 1,
**dadurch gekennzeichnet,**
**dass** bei Erhöhung der angeforderten Kompressorleistung die Leistung des Kondensatorlüfters (9) erhöht und die Leistung des Gebläses (10) reduziert wird.

3. Verfahren nach einem der Ansprüche 1 oder 2,
**dadurch gekennzeichnet,**
**dass** ein mit einer Saugdruckregelung des Kompressors (3) zusammenwirkendes Kompressorregelventil (14) in Abhängigkeit von der Verdampfertemperatur angesteuert wird.

4. Verfahren nach Anspruch 3,
**dadurch gekennzeichnet,**
**dass** das Kompressomegelventil (14) pulsweitenmoduliert angesteuert wird.

5. Verfahren nach Anspruch 3 oder 4,
**dadurch gekennzeichnet,**
**dass** die Ansteuerung des Kompressomegelventils (14) vom Hochdruck nach dem Kompressor (3) abhängig ist.

6. Verfahren nach Anspruch 5,
**dadurch gekennzeichnet,**
**dass** die hochdruckabhängige Ansteuerung des Kompressorregelventils (14) durch Pulsweitenmodulation erfolgt.

7. Verfahren nach Anspruch 5 oder 6,
**dadurch gekennzeichnet,**
**dass** die saugdruckabhängige Ansteuerung des Kompressorregelventils (14) in Abhängigkeit vom Hochdruck freigegeben wird.

8. Verfahren nach Anspruch 5,
**dadurch gekennzeichnet,**
**dass** die saugdruck- und die hochdruckabhängige Steuerungsanforderung verknüpft werden und ein resultierendes PWM-Signal dem Kompressorregelventil (14) zugeführt wird.

9. Verfahren nach einem der obigen Ansprüche 1 bis 8,
**dadurch gekennzeichnet,**
**dass** der Kompressor (3) anstelle der oben beschriebenen internen Saugdruckregelung eine interne Kältemittelmassenstromregelung aufweist.

10. Verfahren nach einem der Ansprüche 5 bis 9,
**dadurch gekennzeichnet,**
**dass** die Geschwindigkeit der saugdruckabhängigen Verstellung des Kompressorregelventils (14) bei Ansprechen der hochdruckabhängigen Ansteuerung des Kompressorregelventils (14) reduziert wird.

11. Verfahren nach einem der Ansprüche 1 bis 10,
**dadurch gekennzeichnet,**
**dass** der Kältemittelkompressor (3) von einem Hilfsantrieb, beispielsweise einer Steam-Cell, angetrieben wird.

## Claims

1. Method for operating a vehicle air conditioning system comprising a power-controlled compressor (3), a refrigerant condenser (4), a condenser fan (9) provided for cooling the condenser and a fan (10) for supplying an air flow to an evaporator (6),
wherein
an increase in compressor power demand causes a shift in the relationship between the output of the fan (10) and the output of the condenser fan (9) towards the condenser fan (9), **characterised in that**, if an increased output of the fan (10) is selected, it is increased in a damped manner.

2. Method according to claim 1,
**characterised in that**
an increase in compressor power demand causes an increase in the output of the condenser fan (9) and a reduction in the output of the fan (10).

3. Method according to claim 1 or 2,
**characterised in that**
a compressor control valve (14) acting together with a suction pressure control of the compressor (3) is controlled in dependence on evaporator temperature.

4. Method according to claim 3,
**characterised in that**
the control of the compressor control valve (14) is pulse width modulated.

5. Method according to claim 3 or 4,
**characterised in that**
the control of the compressor control valve (14) is dependent on the high pressure downstream of the compressor (3).

6. Method according to claim 5,
**characterised in that**
the high pressure-dependent control of the compressor control valve (14) is based on pules width modulation.

7. Method according to claim 5 or 6,
**characterised in that**
the suction pressure-dependent control of the compressor control valve (14) is enabled in dependence on the high pressure.

8. Method according to claim 5,
**characterised in that**
the suction pressure- and high pressure-dependent control demands are coupled and a resulting PWM signal is fed to the compressor control valve (14).

9. Method according to any of claims 1 to 8,
**characterised in that**
instead of the internal suction pressure control described above, the compressor (3) comprises an internal refrigerant mass flow control.

10. Method according to any of claims 5 to 9,
**characterised in that**
the speed of the suction pressure-dependent adjustment of the compressor control valve (14) is reduced as the high pressure-dependent control of the compressor control valve (14) responds.

11. Method according to any of claims 1 to 10,
**characterised in that**
the refrigerant compressor (3) is driven by an auxiliary drive, for example by a steam cell.

## Revendications

1. Procédé de fonctionnement d'un système de climatisation d'un véhicule automobile, système qui comprend un compresseur (3) réglé sur la puissance, un condenseur de fluide frigorigène (4), un ventilateur de condenseur (9) prévu pour le refroidissement du condenseur de fluide frigorigène, et une soufflante (10) prévue pour l'alimentation d'un évaporateur (6) avec un flux d'air,
où, en cas d'augmentation de la puissance exigée du compresseur, le rapport entre la puissance de la soufflante (10), et la puissance du ventilateur (9) du condenseur, est décalé en faveur du ventilateur (9) du condenseur,
**caractérisé en ce qu'**en choisissant une puissance accrue de la soufflante (10), cette puissance est augmentée de façon atténuée.

2. Procédé selon la revendication 1, **caractérisé en ce qu'**en cas d'augmentation de la puissance exigée du compresseur, la puissance du ventilateur (9) du condenseur est augmentée, et la puissance de la soufflante (10) est réduite.

3. Procédé selon l'une des revendications 1 ou 2, **caractérisé en ce qu'**une soupape de réglage (14) du compresseur fonctionnant de façon conjointe avec une régulation de la pression d'aspiration du compresseur (3) est commandée en fonction de la température de l'évaporateur.

4. Procédé selon la revendication 3, **caractérisé en ce que** la soupape de réglage (14) du compresseur est commandée par modulation de largeur d'impulsion.

5. Procédé selon la revendication 3 ou 4, **caractérisé en ce que** la commande de la soupape de réglage (14) du compresseur est réalisée en fonction de la haute pression en aval du compresseur (3).

6. Procédé selon la revendication 5, **caractérisé en ce que** la commande de la soupape de réglage (14) du compresseur, en fonction de la haute pression, est réalisée par modulation de largeur d'impulsion.

7. Procédé selon la revendication 5 ou 6, **caractérisé en ce que** la commande de la soupape de réglage (14) du compresseur, en fonction de la pression d'aspiration, est déclenchée en fonction de la haute pression.

8. Procédé selon la revendication 5, **caractérisé en ce que** les exigences de commande, en fonction de la pression d'aspiration et de la haute pression, sont liées, et un signal de modulation de largeur d'impulsion (PWM) en résultant est fourni à la soupape de réglage (14) du compresseur.

9. Procédé selon l'une quelconque des revendications précédentes 1 à 8, **caractérisé en ce que** le compresseur (3), à la place de la régulation interne de la pression d'aspiration, décrite précédemment, présente une régulation interne du débit massique de fluide frigorigène.

10. Procédé selon l'une quelconque des revendications 5 à 9, **caractérisé en ce que** la vitesse du déplacement de la soupape de réglage (14) du compresseur, en fonction de la pression d'aspiration, est réduite en réponse à la commande de la soupape de réglage (14) du compresseur, en fonction de la haute pression.

11. Procédé selon l'une quelconque des revendications 1 à 10, **caractérisé en ce que** le compresseur de fluide frigorigène (3) est entraîné par une commande auxiliaire, par exemple une cellule de vapeur.
